Europäisches Patentamt

European Patent Office

Office européen des brevets

(19)

(11) Veröffentlichungsnummer: **0 043 102**
B1

(12) # EUROPÄISCHE PATENTSCHRIFT

(45) Veröffentlichungstag der Patentschrift:
15.02.84

(21) Anmeldenummer: 81104902.2

(22) Anmeldetag: 25.06.81

(51) Int. Cl.³: **B 62 D 33/02, E 05 D 7/10**

(54) **Teilbares Scharnier für Bordwände von Lastfahrzeugen.**

(30) Priorität: 27.06.80 DE 3024329

(43) Veröffentlichungstag der Anmeldung:
06.01.82 Patentblatt 82/1

(45) Bekanntmachung des Hinweises auf die Patenterteilung:
15.02.84 Patentblatt 84/7

(84) Benannte Vertragsstaaten:
AT BE CH DE FR GB IT LI NL

(56) Entgegenhaltungen:
DE - A - 2 748 185
FR - A - 1 003 910
FR - A - 2 410 593
US - A - 2 808 611

IBM TECHNICAL DISCLOSURE BULLETIN, Band 5, Nr. 8, Januar 1963, Seite 20 New York, U.S.A F. SCHLEGEL: "Cover hinge"

(73) Patentinhaber: **F. HESTERBERG & SÖHNE GmbH & Co. KG, Hellenbecker Strasse 50-60, D-5828 Ennepetal 1 (DE)**

(72) Erfinder: **Nieland, Friedhelm, Bonkampstrasse 40, D-5805 Breckerfeld (DE)**
Erfinder: **Feinbier, Joachim, Berliner Strasse 65, D-5800 Hagen (DE)**

(74) Vertreter: **Kneissl, Richard, Dr., Widenmayerstrasse 46, D-8000 München 22 (DE)**

Teilbares Scharnier für Bordwände von Lastfahrzeugen

Die Erfindung betrifft ein teilbares Scharnier für Bordwände von Lastfahrzeugen, bestehend aus einem eine waagrechte Achse tragenden Teil (Achsenteil) und einem ein Lager für die Achse tragenden Teil (Lagerteil) sowie einem Riegel, der sowohl in einer Offenstellung als auch in einer die Teilung verhindernden Sperrstellung fixierbar ist.

Derartige teilbare Scharniere gibt es in grundsätzlich zwei verschiedenen Ausführungsformen. Die eine Ausführungsform kann dadurch geteilt werden, dass das Lager am Lagerteil als nach oben offene Lagerschale ausgebildet ist, so dass die Achse des Achsenteils von oben her eingehängt werden kann. In diesem Fall ist das Achsenteil an der Bordwand und das Lagerteil am Fahrzeugrahmen befestigt. Die andere grundsätzliche Ausführungsform kann dadurch geteilt werden, dass die Achse am Achsenteil nur mit einem ihrer Enden befestigt ist und das Lager eine geschlossene Lagerbohrung aufweist. Die Teilung des Scharniers erfolgt dadurch, dass das Lagerteil gegenüber dem Achsenteil in Achsrichtung verschoben wird, bis das Lager von der Achse freikommt. In diesem Fall ist normalerweise das Lagerteil an der Bordwand und das Achsenteil am Fahrzeugrahmen befestigt.

Damit ein zufälliges und unbeabsichtigtes Aushängen der Bordwand verhindert wird, ist bei dem teilbaren Scharnier der eingangs bezeichneten Art, welches aus der FR-A-24 10 593 bekannt ist, ein um eine horizontale Achse verschwenkbarer Riegel vorgesehen, der in seiner abgeklappten Stellung ein Aushängen der Achse aus dem Lager verhindert, der aber nach oben bis über den Totpunkt hochgeschwenkt werden kann und in dieser Lage aufgrund der Schwerkraft festgehalten wird. In dieser Stellung des Riegels kann die Bordwand ausgehängt werden.

Nachteilig an diesem bekannten teilbaren Scharnier ist, dass das Herunterklappen des schwenkbaren Riegels vergessen werden kann, so dass es zu einem unbeabsichtigten Aushängen der Bordwand und damit zu Verletzungen des Bedienungspersonals kommen kann.

Der Erfindung lag demgemäss die Aufgabe zugrunde, ein teilbares Scharnier der eingangs beschriebenen Art so weiterzubilden, dass das Schliessen des Sicherungsriegels nicht vergessen werden kann.

Die Aufgabe wird erfindungsgemäss bei einem teilbaren Scharnier der eingangs bezeichneten Art gelöst durch eine Einrichtung, welche bei einer Bewegung des Lagerteils relativ zum Achsenteil die Fixierung des Riegels in der Offenstellung beseitigt und den Riegel in die Sperrstellung bringt.

Wird eine Bordwand, die mit einem teilbaren Scharnier an einem Lastfahrzeug befestigt ist, eingehängt und hochgeklappt, so wird spätestens beim Hochklappen der Riegel aus der Offenstellung in die Sperrstellung gebracht, so dass beim erneuten Abklappen der Bordwand diese nicht mehr unbeabsichtigt ausgehängt werden kann.

Das erfindungsgemässe teilbare Scharnier kann eine oben offene Lagerschale aufweisen, so dass die Bordwand von oben her eingehängt werden kann. Es ist aber auch möglich, dass die Achse nur mit einem Ende am Achsenteil befestigt ist und dass das Lagerteil eine geschlossene Lagerbohrung aufweist. Beide Teilungsmöglichkeiten des erfindungsgemässen Scharniers sind im Prinzip bekannt.

Der Riegel, der verschwenk- oder verschiebbar ist, kann beispielsweise durch eine Feder, durch eine Klinke oder durch Schwerkraft in Sperrstellung festgehalten werden. In ähnlicher Weise kann der Riegel durch eine Feder durch eine Klinke oder gegen die Wirkung der Schwerkraft durch einen Anschlag in Offenstellung fixiert werden.

Mehrere Ausführungsformen des erfindungsgemässen Scharniers werden nun anhand der beigefügten Zeichnungen näher erläutert.

In den Zeichnungen zeigen:

Fig. 1 eine teilweise geschnittene Ansicht einer ersten Ausführungsform;

Fig. 1A einen Schnitt an der Linie A–A von Fig. 1;

Fig. 2 eine teilweise geschnittene Ansicht einer zweiten Ausführungsform;

Fig. 2A einen Schnitt an der Linie A–A von Fig. 2;

Fig. 2B einen Schnitt an der Linie B–B von Fig. 2, gesehen in Pfeilrichtung;

Fig. 3 eine teilweise geschnittene Ansicht einer dritten Ausführungsform;

Fig. 3A einen Schnitt an der Linie A–A von Fig. 3, gesehen in Pfeilrichtung;

Fig. 3B einen Schnitt an der Linie B–B von Fig. 3, gesehen in Pfeilrichtung;

Fig. 4 eine Ansicht einer vierten Ausführungsform;

Fig. 4A einen Schnitt an der Linie A–A von Fig. 4;

Fig. 4B einen Schnitt an der Linie B–B von Fig. 4;

Fig. 4C einen Schnitt an der Linie C–C von Fig. 4.

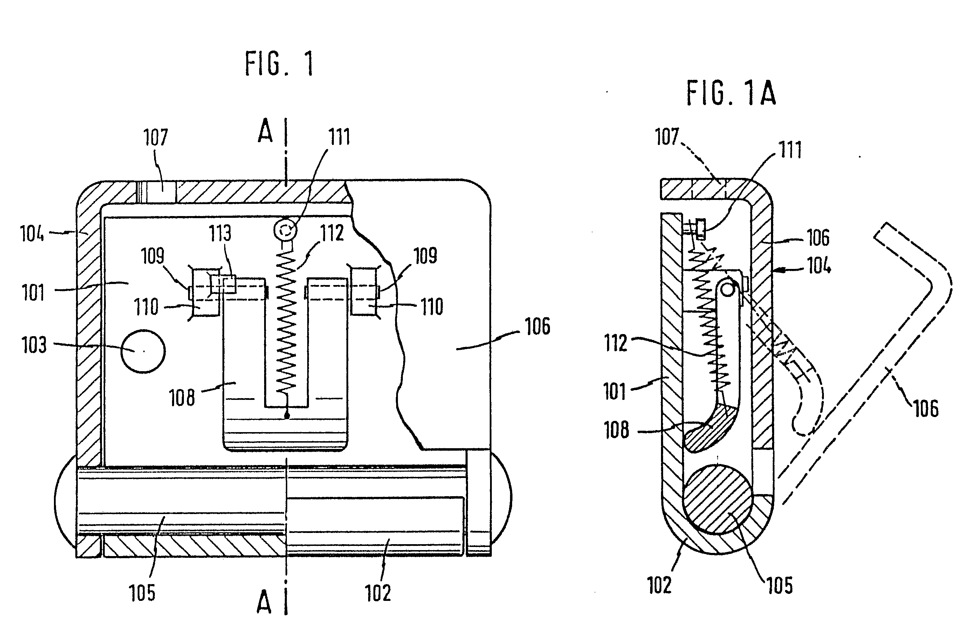

Die in den Figuren 1 und 1A gezeigte Ausführungsform besitzt ein plattenförmiges Lagerteil 101, das an seiner Unterseite U-förmig umgebogen ist, so dass eine Lagerschale 102 gebildet wird. Das Lagerteil weist Löcher 103 (eines ist verdeckt) auf, mit deren Hilfe das Lagerteil am Fahrzeugrahmen festgeschraubt werden kann. Das Scharnier besitzt weiterhin ein bügelförmiges Achsenteil 104, das an den Bügelenden eine Achse 105 festhält. Auf der Vorderseite ist der Bügel mit einer Abdeckplatte 106 versehen, welche die darunter liegenden Teile vor Verschmutzung schützt. An der Oberseite besitzt das Achsenteil Löcher 107 (eines ist verdeckt), mit deren Hilfe das Achsenteil an einer Bordwand festgeschraubt werden kann.

Die Sicherungseinrichtung gegen unbeabsichtigtes Aushängen besteht aus einem U-förmigen Sperriegel 108, der mittels zweier Achsen 109 schwenkbar an Lagerböcken 110 befestigt ist. Der Sperriegel ist an seiner Unterseite in Richtung auf das plattenförmige Lagerteil 101 abgebogen, um einen Anschlag zu bilden.

Des weiteren ist am Lagerteil 101 ein mit einem Kopf versehener Stift 111 angebracht, von dem sich eine Feder 112 bis zum Querbalken des U-förmigen Sperriegels spannt. Die beiderseitigen Befestigungspunkte der Feder 112 sind so gewählt, dass die Anlenkachsen 109 für den Sperriegel 108 in dessen Sperrstellung vor der gespannten Feder liegen. Dadurch wird erreicht, dass der Sperriegel 108 in die Sperrstellung gezogen wird. Er kann jedoch gegen die Wirkung der Feder 112 ausgeschwenkt werden. Nach Überschreiten des Totpunktes wird der Sperriegel 108 durch die Feder 112 in die Offenstellung gezogen. Damit der Sperriegel 108 nicht zu weit ausschwenken kann, ist an einem der Lagerböcke 109 ein Anschlag 113 vorgesehen.

Das Aushängen der Bordwand kann bei Verwendung eines solchen Scharniers in der Weise geschehen, dass der Sperriegel 108 nach Abklappen der Bordwand in die Lage ausgeschwenkt wird, die in Fig. 1A gestrichelt dargestellt ist. Danach kann die Bordwand ausgehängt werden.

Beim Hochklappen der Bordwand wird durch die Abdeckplatte 106 der Sperriegel wieder eingeschwenkt, so dass das Scharnier automatisch gegen Aushängen gesichert wird.

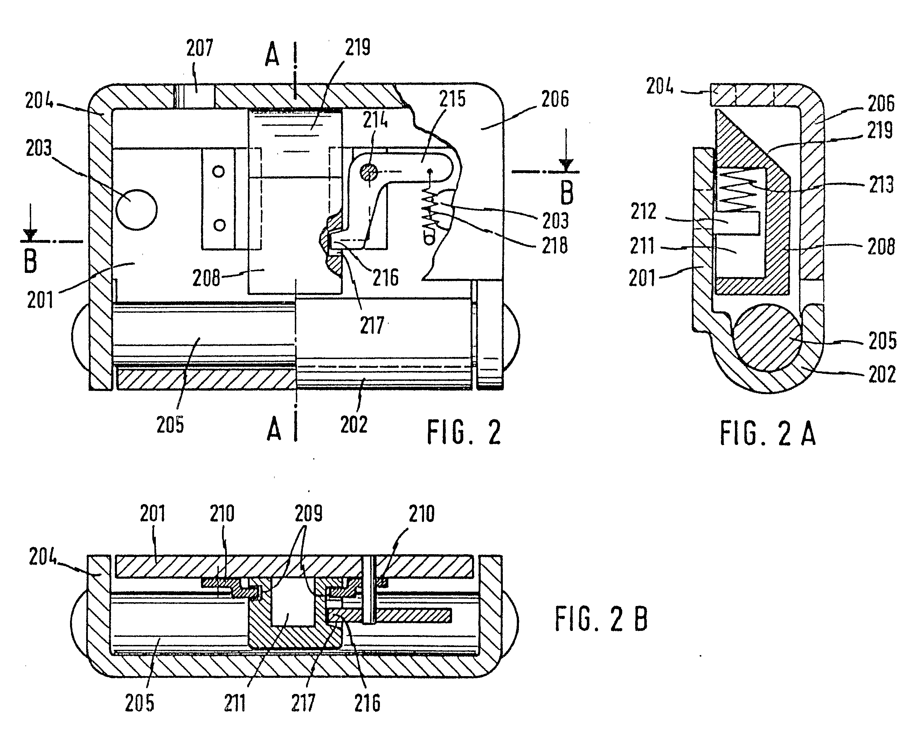

Bei der in den Figuren 2, 2A und 2B dargestellten Ausführungsform sind das Lagerteil und das Achsenteil in ähnlicher Weise aufgebaut wie bei der Ausführungsform der Fig. 1 und 1A.

Sie besitzt ein plattenförmiges Lagerteil 201, das an seiner Unterseite U-förmig umgebogen ist, so dass eine Lagerschale 202 gebildet wird. Mit Hilfe von Löchern 203 kann das Lagerteil am Fahrzeugrahmen festgeschraubt werden. Ein bügelförmiges Achsenteil 204 hält im Bereich der Enden seiner Schenkel eine Achse 205 fest. Das bügelförmige Achsenteil 204 ist mit einer Abdeckplatte 206 versehen, welche die darunter liegenden Sicherungselemente schützt. Mit Hilfe von Löchern 207 kann das Achsenteil an einer Bordwand festgeschraubt werden.

Zur Sicherung gegen unbeabsichtigtes Aushängen der Bordwand ist am plattenförmigen Lagerteil 201 ein verschiebbarer Sperriegel 208 angebracht. Er besitzt seitliche Nuten 209, in welche am plattenförmigen Lagerteil 201 befestigte gekröpfte Führungsbleche 210 eingreifen. Auf der dem plattenförmigen Lagerteil 201 zugewandten Seite besitzt der Sperriegel 208 eine Ausnehmung 211, in welche ein Lagerblock 212, der am plattenförmigen Lagerteil 201 befestigt ist, vorspringt. Eine Druckfeder 213 ist zwischen dem Lagerblock und der Oberseite der Ausnehmung 211 im Sperriegel 208 eingespannt. Sie versucht den Sperriegel nach oben zu drücken. Dies wird durch eine um eine Achse 214 schwenkbare Klinke 215 verhindert, die mit einem Vorsprung 216 in eine entsprechende Ausnehmung 217 des Sperriegels eingreift. Die Klinke wird durch eine Zugfeder 218 in Eingriffstellung gehalten.

In der dargestellten Stellung des Sperriegels 208 ist das Aushängen der Bordwand blockiert. Das Aushängen erfolgt in der Weise, dass nach dem Abklappen der Bordwand die Sperrklinke 215 entgegen dem durch die Feder 218 ausgeübten Zug betätigt wird, so dass der Vorsprung 216 von der Ausnehmung 217 freikommt. Dadurch kann die Feder 213 den Sperriegel nach oben drücken, bis die Ausnehmung 211 mit ihrer Unterseite am Lagerblock 212 anliegt.

Beim Hochklappen der Bordwand wird der Sperriegel 208, der an seiner Oberseite eine Abschränkung 219 aufweist, ähnlich wie der Sperriegel eines Türschlosses niedergedrückt, bis der Vorsprung 216 der Sperrklinke 215 wieder in die Ausnehmung 217 einrastet. Die Bordwand ist nunmehr wieder gegen Aushängen gesichert.

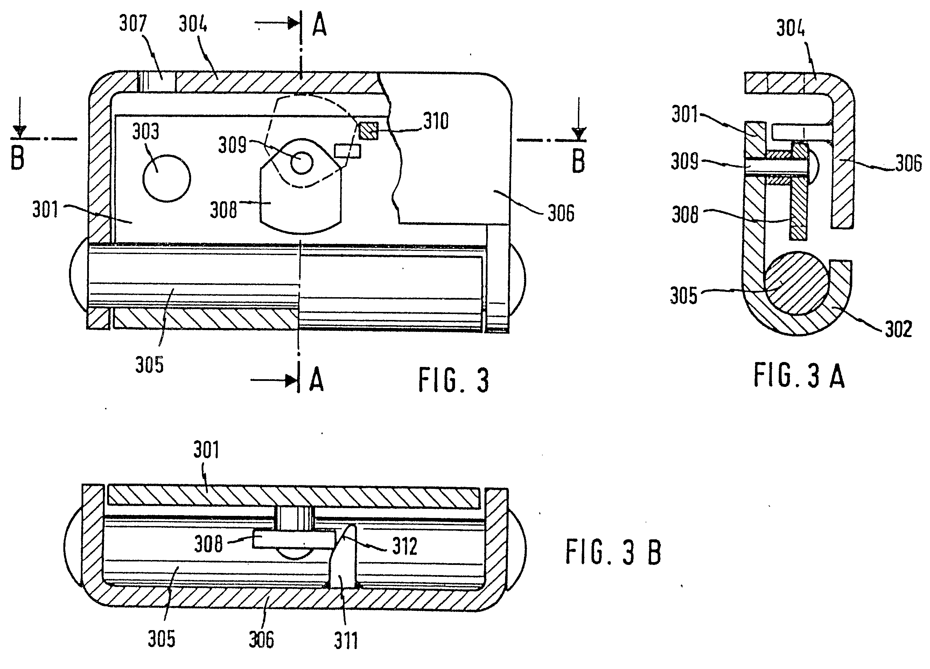

Bei der in den Figuren 3, 3A und 3B dargestellten Ausführungsform sind das Lagerteil und das Achsenteil wiederum in ähnlicher Weise aufgebaut wie bei der Ausführungsform der Figuren 1 und 1A.

Ein plattenförmiges Lagerteil 301 ist an seiner Unterseite U-förmig umgebogen, so dass eine Lagerschale 302 gebildet wird. Durch Löcher 303 kann das Lagerteil an einem Fahrzeugrahmen festgeschraubt werden. Ein bügelförmiges Achsenteil 304 hält mit seinen Schenkelenden eine Achse 305 fest. Eine Abdeckplatte 306 ist am bügelförmigen Achsenteil 304 befestigt und schützt die darunter liegenden Sicherungselemente gegen Verschmutzung. Mittels Löcher 307 im Achsenteil kann letzteres an einer Bordwand festgeschraubt werden.

Die Sicherung gegen unbeabsichtigtes Aushängen besteht aus einem schwenkbar aufgehängten Sperriegel 308, dessen Schwenkachse 309 durch den oberen Teil des Sperriegels 308 hindurchgeht und senkrecht auf dem Lagerteil 301 befestigt ist. Aufgrund dieser Anordnung hängt der Sperriegel 308 nach unten und verhindert ein Aushängen der Achse 305 und damit der Bordwand.

Zum Aushängen der Bordwand wird nach dem Abklappen der letzteren der Sperriegel 308 im Uhrzeigersinn mehr als 180° verschwenkt, bis er an einem Anschlag 310 (der aus Gründen der Klarheit in den Figuren 3A und 3B weggelassen ist) anliegt. Nunmehr kann die Achse 305 aus der Lagerschale 302 ausgehängt werden. Beim Hochklappen der Bordwand drückt ein an der Innenseite der Abdeckplatte 306 befestigter Zinken 311 mit einer Anschrägung 312 gegen eine Seitenkante des Sperriegels, wodurch dieser entgegen dem Uhrzeigersinn so weit verschoben wird, dass er das Übergewicht bekommt und aufgrund der Schwerkraft sich wieder in die Sperrstellung verschwenkt, wie es in Fig. 3 zu sehen ist.

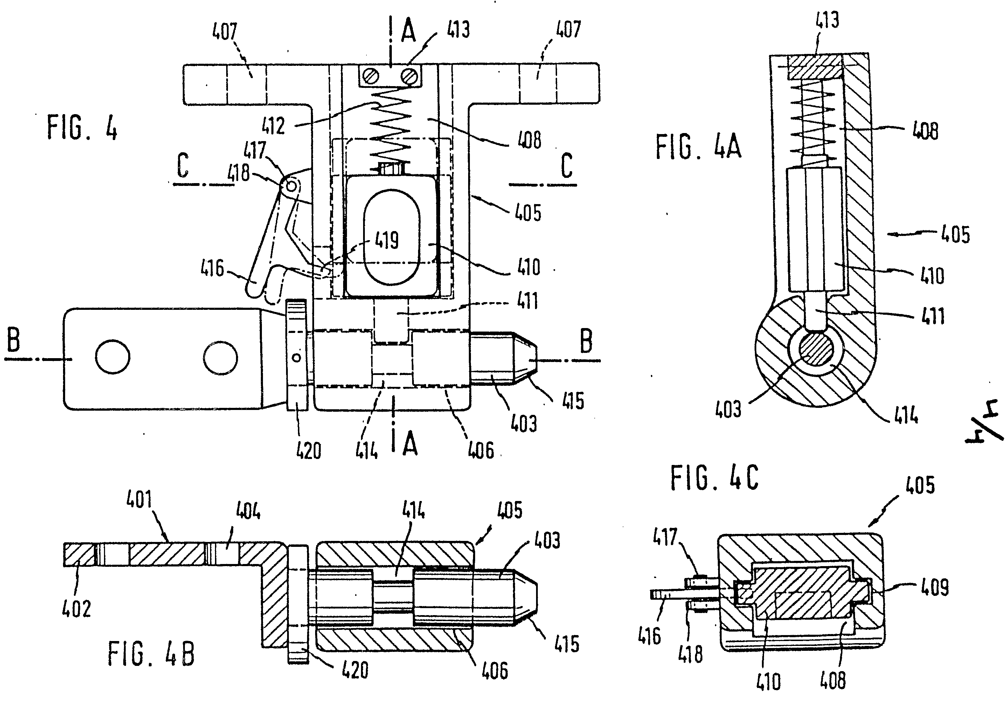

Die Ausführungsform, die in den Figuren 4, 4A, 4B und 4C dargestellt ist, ist ein in axialer Richtung teilbares Scharnier.

Ein Achsenteil 401 besteht aus einem Winkel 402 und einer daran befestigten Achse 403. Mit Hilfe von Löchern 404 im Winkel 402 kann das Achsenteil am Rahmen eines Lastfahrzeuges festgeschraubt werden. Ein Lagerteil 405 ist T-förmig ausgebildet und weist an seiner Unterseite eine Lagerbohrung 406 auf. Löcher 407 sind im Querbalken des T vorgesehen, damit das Lagerteil an einer Bordwand festgeschraubt werden kann. Auf der Vorderseite besitzt der senkrechte Balken des T eine Ausnehmung 408 mit seitlichen Führungsnuten 409. Ein Sperrelement 410 ist in diesen Führungsnuten 409 geführt. Das Sperrelement besitzt auf seiner Unterseite einen Sperrzapfen 411, der unten nicht abgerundet ist. Eine Druckfeder 412, die sich an einem Lagerbock 413 abstützt, drückt das Sperrelement 410 mit dem Sperrzapfen 411 nach unten, so dass letzterer in eine entsprechende ringförmige Ausnehmung 414 in der Achse 403 gedrückt wird. Dadurch wird das Lagerteil auf dem Achsenteil festgehalten.

Wenn das Scharnier geteilt werden soll, dann wird das Sperrelement 410 gegen die Wirkung der Feder 412 nach oben geschoben, und zwar solange, bis eine Klinke 416, die schwenkbar auf einer Achse 417 auf einem Ansatz 418 am Lagerteil 405 befestigt ist, mit einem Vorsprung 419 unter das Sperrelement 410 greift. Hierdurch wird das Sperrelement in einer gehobenen Lage fixiert, so dass das Scharnier geteilt werden kann. Während der axialen Teilungsbewegung kommt nun die Klinke 416 in Anlage mit einem ringförmigen Anschlag 420, der auf der Achse 403 befestigt ist. Der ringförmige Anschlag ist auf der dem Fahrzeugrahmen zugewandten Seite abgeflacht, so dass er die Befestigung des Achsenteils am Fahrzeugrahmen nicht stört. Bei der weiteren axialen Teilungsbewegung wird nun die Klinke 416 nicht mehr unter das Sperrelement geschoben, dass ihr Vorsprung 419 nicht mehr und das Sperrelement 410 greift, was zur Folge hat, dass die Feder 412 letzteres wieder nach unten drückt. Der Sperrzapfen 411 ist aber bereits so weit seitlich verschoben, dass er die ringförmige Ausnehmung 414 nicht mehr erreichen kann. Er kann also nicht mehr in diese einrasten.

Zum Zusammenfügen des Scharniers besitzt die Achse eine Anschrägung 415, die so spitz ausgeführt ist, dass der voll abgesenkte Sperrzapfen 411 beim Zusammenstecken des Scharniers auf diese Anschrägung auflaufen kann. Beim Erreichen der ringförmigen Ausnehmung 414 schiebt die Feder 412 das Sperrelement 410 mit dem Sperrzapfen 411 wieder nach unten, so dass letzterer wieder in die ringförmige Ausnehmung 414 einrastet. Da der Vorsprung 419 bei all diesen Vorgängen das Sperrelement 410 nicht untergreifen kann, bleibt die Klinke 416 so weit ausgeschwenkt, dass sie beim Zusammenfügen des Scharniers über den ringförmigen Anschlag 420 geführt wird.

Es wird darauf hingewiesen, dass es in manchen Fällen ausreicht, wenn nur eines der Scharniere einer Bordwand ein erfindungsgemässes Scharnier ist. Dies gilt insbesondere bei den Ausführungsformen, die in axialer Richtung teilbar sind. Es wird des weiteren darauf hingewiesen, dass mehrere Scharniere auch mit einem Mechanismus verbunden werden können, der ein gleichzeitiges Betätigen aller Freigabemechanismen ermöglicht. So ist es durchaus denkbar, bei Verwendung mehrerer Scharniere der Ausführungsform der Fig. 2–2B eine Verbindungsstange vorzusehen, mit der alle Sperrklinken 215 gleichzeitig betätigt werden können.

**Patentansprüche**

1. Teilbares Scharnier für Bordwände von Lastfahrzeugen, bestehend aus einem eine waagrechte Achse tragenden Teil (Achsenteil (104, 204, 304, 401) und einem ein Lager für die Achse tragenden Teil (Lagerteil (101, 201, 301, 405) sowie einem Riegel (108, 208, 308, 410), der sowohl in einer Offenstellung als auch in einer die Teilung verhindernden Sperrstellung fixierbar ist, gekennzeichnet durch eine Einrichtung (106, 204, und 219, 311, 416 und 420), welche bei einer Bewegung des Lagerteils relativ zum Achsenteil die Fixierung des Riegels (108, 208, 308, 410) in der Offenstellung beseitigt und den Riegel in die Sperrstellung bringt.

2. Scharnier nach Anspruch 1, dadurch gekennzeichnet, dass das Lagerteil (101, 201, 301) eine oben offene Lagerschale (102, 202, 302) aufweist.

3. Scharnier nach Anspruch 1, dadurch gekennzeichnet, dass die Achse (403) nur mit einem Ende am Achsenteil (401) befestigt ist und dass das Lagerteil (405) eine geschlossene Lagerbohrung (406) aufweist.

4. Scharnier nach Anspruch 1, 2 oder 3, dadurch gekennzeichnet, dass der Riegel (108, 208, 308, 410) durch eine Feder (112, 412), durch eine Klinke (215) oder durch Schwerkraft in der Sperrstellung fixierbar ist.

5. Scharnier nach Anspruch 1,2, 3 oder 4, dadurch gekennzeichnet, dass der Riegel (108, 208, 308, 410) durch eine Feder (112, 213), durch die Wirkung der Schwerkraft mit Hilfe eines Anschlags (310) oder durch eine Klinke (416) in Offenstellung fixierbar ist.

**Revendications**

1. Charnière séparable pour les bordages de camions comprenant une partie portant un axe horizontal (partie axe) 104, 204, 304, 401 et une partie portant un coussinet pour l'axe (partie coussinet) 101, 201, 301, 405, comprenant également un verrou (108, 208, 308, 410) pouvant être fixé à la fois en une position d'ouverture et en une position de blocage empêchant la séparation et caractérisée par un dispositif (106, 204 et 219, 311, 416 et 420), qui supprime la fixation du verrou (108, 208, 308, 410) en position d'ouverture lors d'un mouvement de la partie coussinet relatif à la partie axe et qui amène le verrou en position de fermeture.

2. La charnière selon la prétention 1 se caractérise par le fait que la partie coussinet (101, 201, 301) présente une enveloppe de coussinet ouverte sur le haut (102, 202, 302).

3. La charnière selon la prétention 2 se caractérise par le fait que l'axe (403) n'est fixé à la partie axe (401) que par une extrémité et que la partie coussinet (405) présente un perçage fermé (406).

4. La charnière d'après les prétentions 1, 2 et 3 se caractérise par le fait que le verrou (108, 208, 308, 410) peut être fixé en position de fermeture par un ressort (112, 412) par un loquet (215) ou par la pesanteur.

5. La charnière d'après les prétentions 1, 2, 3 et 4 se caractérise par le fait que le verrou (108, 208, 308, 410) peut être fixé en position d'ouverture par un ressort (112, 213), par l'effet de la pesanteur avec l'aide d'un taquet (310) ou par un loquet (416).

### Claims

1. Separable hinge for the sides of heavy goods vehicles, comprising a part having a horizontal shaft (shaft part) (102, 204, 304, 401), a part having a bearing for the shaft (bearing part) (101, 201, 301, 405) and a latch bolt (108, 208, 308, 410) which can be secured either in an open position or in a locked position preventing the separation of the hinge, characterized by a means (106, 204 and 219, 311, 416 and 420) which when the bearing part moves in relation to the shaft part, overcomes the locking of the latch bolt (108, 208, 308, 410) in the open position and moves the bolt into the locked position.

2. A hinge in accordance with Claim 1, characterized by the bearing part (101, 201, 301) having an open bearing bush (102, 202, 302).

3. A hinge in accordance with Claim 1, characterized by the shaft 403 being secured by one end only to the shaft part (401) and the bearing part (405) having a closed bearing bore (406).

4. A hinge in accordance with Claim 1, 2 or 3, characterized by the latch bolt (108, 208, 308, 410) being securable in the locked position by means of a spring (112, 412), a pawl (215) or by gravity.

5. A hinge in accordance with Claim 1,2, 3 or 4, characterized by the bolt (108, 208, 308, 410) being securable in the open position by means of a spring (112, 213), gravity and the aid of a stop (310) or a pawl (416).

FIG. 1A

106

111

106
104

107

112

101

108

105

102

FIG. 1

A

A

106

109

110

111

112

113

109

110

108

107

104

101

103

102

105

FIG. 2

FIG. 2 A

FIG. 2 B

307 304 A

310

303

309

301 306

308

305 A FIG. 3

B B

304

301

309 306

308

305 302 FIG. 3 A

301

308 312

305 306 311 FIG. 3 B

0 043 102

3/4

11

1/4

FIG. 4

FIG. 4A

FIG. 4B

FIG. 4C